**Europäisches Patentamt**

**European Patent Office**

**Office européen des brevets**

(19)

(11) Numéro de publication : **0 373 995 B1**

## (12) FASCICULE DE BREVET EUROPEEN

(45) Date de publication du fascicule du brevet :
**29.04.92 Bulletin 92/18**

(51) Int. Cl.$^5$ : **B62D 3/12**

(21) Numéro de dépôt : **89403301.8**

(22) Date de dépôt : **29.11.89**

(54) **Dispositif de réglage de jeu pour mécanisme de direction à crémaillère de véhicule automobile.**

(30) Priorité : **14.12.88 FR 8816460**

(43) Date de publication de la demande :
**20.06.90 Bulletin 90/25**

(45) Mention de la délivrance du brevet :
**29.04.92 Bulletin 92/18**

(84) Etats contractants désignés :
**DE GB IT**

(56) Documents cités :
**AT-B- 375 452**
**FR-B- 2 337 289**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Vadaine, Bernard**
**1, Rue E. Varlin Ecole G.Péri**
**F-95190 Goussainville (FR)**

(74) Mandataire : **Fabien, Henri et al**
**PEUGEOT SA. Propriété Industrielle 18, rue
des Fauvelles**
**F-92250 La Garenne-Colombes (FR)**

EP 0 373 995 B1

**Description**

L'invention a pour objet un dispositif de réglage de jeu entre la crémaillère et le pignon d'attaque d'un mécanisme de direction à crémaillère, pour véhicule automobile.

Le pignon et la crémaillère sont généralement maintenus en contact avec un jeu minimal par l'intermédiaire d'un poussoir appliqué contre la crémaillère au moyen d'un élément élastique. Il est indispensable de prévoir un jeu de fonctionnement minimal, pour éviter tout risque de blocage de la direction, jeu nécessaire pour compenser par exemple les imprécisions d'usinage ou absorber les différences de jeu dûes aux dilatations thermiques.

Pour satisfaire à ces exigences, il est connu par le brevet FR-B-2337289 de régler le jeu entre le pignon et la crémaillère à l'aide d'un poussoir appliqué contre la crémaillère par un élément élastique dont la compression est réglée par le serrage d'un bouchon vissé dans le boîtier de crémaillère, un jeu minimal étant prévu entre le bouchon et le poussoir.

Dans ce dispositif, les moyens de réglage comportent une pièce tronconique disposée dans le bouchon et dont la face supérieure présente une surface dentée destinée à coopérer avec l'extrémité du ressort formant cliquet. Une telle solution ne permet pas un réglage automatique, le desserrage du bouchon n'étant pas limité automatiquement. De plus, elle nécessite l'usinage de pièces.

On connait par ailleurs, par exemple par le brevet AT-B-375 452, un ressort autobloquant entre une vis et un écrou où le ressort coopère avec deux faces de deux encoches formées dans l'écrou pour éviter que l'écrou ne se dévisse.

L'invention a pour but de réaliser un dispositif de réglage de jeu entre la crémaillère et le pignon d'un mécanisme de direction qui évite les inconvénients précités, et qui présente une conception simple permettant un réglage automatique.

L'invention concerne donc un dispositif de réglage de jeu entre la crémaillère et le pignon d'attaque d'un mécanisme de direction à crémaillère comprenant un poussoir dont le fond est appliqué contre la crémaillère par un élément élastique, par exemple un ressort hélicoïdal, prenant appui sur un bouchon vissé dans le boîtier de crémaillère, un jeu minimal J étant prévu entre le bouchon et le poussoir.

Selon l'invention, le dispositif de réglage de jeu comporte un ressort autobloquant disposé autour du bouchon, permettant le vissage du bouchon à l'intérieur du boîtier de crémaillère et comprenant un ergot disposé dans une encoche, réalisée dans le boîtier de crémaillère ou dans le bouchon, d'une largeur L, l'ergot coopérant avec l'une des faces P1 de l'encoche lors du vissage de bouchon à l'intérieur du boîtier de crémaillère, tandis qu'il coopère avec l'autre face P2 de l'encoche pour limiter le dévissage du bouchon à la valeur L de l'encoche correspondant à la valeur du jeu J minimal désiré.

Selon un mode de réalisation, un ressort autobloquant est disposé autour du bouchon dans une gorge réalisée à son extrémité tournée vers l'extérieur du boîtier de crémaillère et comporte un ergot disposé dans une encoche réalisée sur la face extérieure du boîtier de crémaillère, le sens de l'enroulement du ressort étant tel qu'il se desserre en permettant le vissage du bouchon lorsque l'ergot est en appui sur la face P1 de l'encoche tandis qu'il se resserre en empêchant le dévissage du bouchon lorsque la face P2 de l'encoche est en appui sur l'ergot.

Selon un autre mode de réalisation, le ressort autobloquant forme un filet rapporté sur le filetage du bouchon et comporte un ergot tourné vers l'intérieur du ressort et disposé dans une encoche formée sur le bouchon, le sens de l'enroulement du ressort étant tel qu'il est entraîné, lors du vissage du bouchon, par l'ergot en appui sur la face P1 de l'encoche tandis qu'il se resserre empêchant le dévissage du bouchon lorsque la face P2 de l'encoche est en appui sur l'ergot.

D'autres caractéristiques et avantages de l'invention apparaîtront mieux dans la description détaillée qui suit et se réfère aux dessins annexés donnés uniquement à titre d'exemple, et dans lesquels:

– la Figure 1 est une vue en coupe suivant I-I de la figure 2 du mécanisme de direction à crémaillère suivant un premier mode de réalisation du dispositif de réglage de jeu;

– la Figure 2 est une vue en élévation avec coupe partielle suivant II-II de la figure 1;

– la Figure 3 est une vue développée suivant III-III de la figure 2;

– la Figure 4 est une vue en coupe suivant IV-IV de la figure 5 selon un second mode de réalisation du dispositif de réglage de jeu;

– la Figure 5 est une vue en élévation avec coupe partielle suivant V-V de la figure 4.

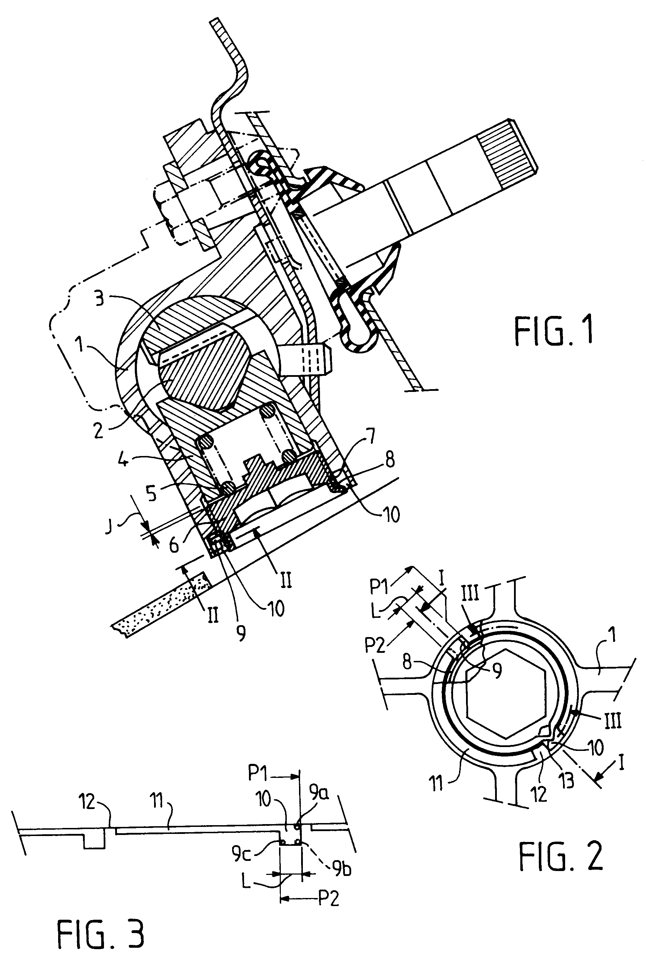

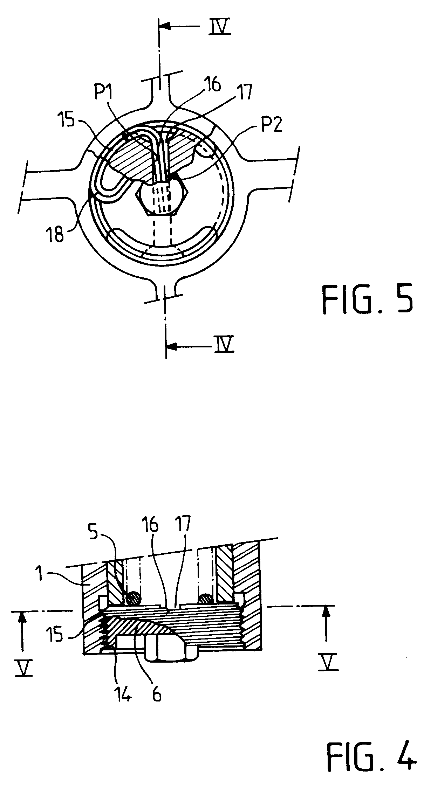

Le mécanisme de direction montre, aux figures 1 et 4, un boîtier de crémaillère 1 à l'intérieur duquel se déplace une crémaillère 2 coopérant avec le pignon d'attaque 3. La crémaillère 2 est poussée contre le pignon 3 par un poussoir 4 dont le fond en forme de V coopère avec une forme complémentaire de la crémaillère. Le poussoir 4 présente la forme d'un corps cylindrique creux à l'intérieur duquel est logé un ressort 5 hélicoïdal comprimé entre le fond du poussoir 4 et un bouchon 6 vissé dans le boîtier 1. Un jeu J est prévu entre le poussoir 4 et le bouchon 6 de manière à assurer le bon fonctionnement de la direction.

Le réglage de ce jeu se fait initialement, mais peut être effectué ultérieurement, après une constatation d'une usure du pignon et de la crémaillère entraînant des claquements du fait d'une augmentation de ce jeu.

Selon un premier mode de réalisation représenté par les figures 1 à 3, le bouchon 6 comporte à son extrémité tournée vers l'extérieur du boîtier 1, sur sa surface extérieure cylindrique, une gorge 7. Un ressort hélicoïdal autobloquant 8 est disposé dans la gorge 7 et présente à son extrémité, située vers l'intérieur du boîtier, un ergot 9 tourné vers l'extérieur (du ressort 8). Le boîtier 1 présente au moins une encoche 10 destinée à recevoir l'ergot 9 du ressort 8. Il est prévu de préférence deux encoches 10, diamétralement opposées et des dégagements 11 réalisés sur la surface extérieure 12 du boîtier 1, entre ces deux encoches de manière à faciliter l'introduction de l'ergot 9 du ressort 8 dans l'une des encoches 10 lors du vissage du bouchon 6 à l'intérieur du boîtier 1. Le sens de l'enroulement du ressort 8 est tel que celui-ci se desserre lorsque l'ergot 9 vient en butée sur la face P1 de l'encoche 10 dans le sens du vissage du bouchon 6, tandis qu'il se resserre lorsque l'ergot 9 est en butée sur la face P2 de l'encoche 10 dans le sens du dévissage du bouchon 6.

Les encoches 10 ont une largeur L permettant le déplacement de l'ergot 9 entre les faces P1 et P2 et par suite le dévissage du bouchon de cette valeur L de manière à assurer le jeu J prévu entre le poussoir 4 et le bouchon 6.

Le réglage du jeu J s'effectue de la manière suivante:
le ressort 8 étant engagé autour du bouchon 6 dans la gorge 7, le bouchon 6 est vissé à l'intérieur du boîtier 1, l'ergot 9 du ressort 8 vient, sans risque de coincement grâce au dégagement 11, en contact en 9a avec la face P1 de l'encoche 10 (figure 3). Le bouchon 6 est vissé jusqu'à ce que le jeu entre le bouchon 6 et le poussoir 4 soit nul, l'ergot 9 du ressort 8 occupant alors la position 9b au fond de l'encoche 10. Le bouchon 6 est alors dévissé: la face P2 de l'encoche 10 vient en contact avec l'ergot 9 du ressort 8 qui occupe alors la position 9c, provoquant le serrage du ressort 8 sur le bouchon 6 et empêchant ainsi tout desserrage.

Une sécurité supplémentaire pour éviter le desserrage du bouchon peut être obtenue par une déformation 13 de la spire extérieure du ressort 8 coopérant avec l'autre encoche 10, opposée à celle recevant l'ergot 9 du ressort 8.

Selon le deuxième mode de réalisation représenté aux figures 4 et 5, un ressort autobloquant 15 forme un filet rapporté engagé autour du bouchon 6 sur le filetage 14. Il présente à une de ses extrémités un ergot 16 tourné vers l'intérieur du ressort et destiné à coopérer avec une encoche 17 formée dans le bouchon 6 sur sa face tournée vers l'intérieur du boîtier 1. Le ressort autobloquant présente à son autre extrémité un crochet 18 retourné vers l'interieur du ressort et en appui sur la face extérieure du bouchon 6. Le sens de l'enroulement du ressort autobloquant est tel qu'il est entraîné, lors du vissage du bouchon 6 à l'intérieur du boîtier 1, par l'ergot 16 en appui sur la face P1 de l'encoche tandis qu'il se resserre, empêchant le dévissage du bouchon, lorque la face P2 de l'encoche vient en appui sur l'ergot.

L'encoche 17 présente une largeur L permettant le déplacement de l'ergot 16 entre les faces P1 et P2 et par suite le dévissage du bouchon 6 de cette valeur de manière à assurer le jeu J prévu entre le poussoir 4 et le bouchon 6.

Le réglage du jeu s'effectue de la manière suivante:
Le ressort 15 en forme de filet étant rapporté sur le filetage 14 du bouchon 6, l'ergot 16 étant engagé dans l'encoche 17, le bouchon 6 est vissé dans le boîtier 1. Le ressort 15 en forme de filet est entraîné grâce à la coopération entre la face P1 de l'encoche et l'ergot 16. Le bouchon 6 est vissé jusqu'à ce que le jeu entre le poussoir 4 et le bouchon 6 soit nul, puis il est dévissé de la largeur de l'encoche L, la face P2 de l'encoche 17 venant en contact avec l'ergot 16, le ressort 15 se resserrant sur le bouchon empêchant son dévissage.

En cas de nécessité de démontage du bouchon 6, le ressort 15 peut être entraîné lors du dévissage du bouchon 6 grâce à un outil coopérant avec le crochet 18.

On remarque donc qu'un tel réglage s'effectue de manière simple et automatique avec des pièces ne nécessitant pas d'usinage particulier.

## Revendications

1. Dispositif de réglage de jeu entre la crémaillère (2) et le pignon d'attaque (3) d'un mécanisme de direction à crémaillère pour véhicule automobile, comprenant un poussoir (4) dont le fond est appliqué contre la crémaillère (2) par un élément élastique, par exemple un ressort hélicoïdal (5), prenant appui sur un bouchon vissé (6) dans le boîtier de crémaillère (1), un jeu minimal (J) étant prévu entre le bouchon (6) et le poussoir (4), caractérisé en ce qu'il comporte un ressort autobloquant (8,15) disposé autour du bouchon (6) et comprenant un ergot (9,16) coopérant avec une encoche (10,17) d'une largeur déterminée (L) réalisée sur le boîtier de crémaillère (1) ou dans le bouchon (6), l'ergot coopérant avec l'une des faces (P1) de l'encoche (10,17) lors du vissage du bouchon (6) tandis qu'il coopère avec l'autre face (P2) de l'encoche pour limiter le dévissage du bouchon à la valeur (L) de l'encoche correspondant à la valeur (J) du jeu minimal désiré.

2. Dispositif selon la revendication 1, caractérisé en ce que le ressort autobloquant (8) est disposé dans une gorge (7) réalisée à l'extrémité du bouchon (6) tournée vers l'extérieur du boîtier (1) et comportant un ergot (9) disposé dans une encoche (10) réalisée sur la face extérieur (12) du boîtier de crémaillère (1), le sens de l'enroulement du ressort autobloquant (8) étant tel qu'il se desserre permettant le vissage du bouchon (6) lorsque l'ergot (9) est en appui sur l'une des faces (P1) de l'encoche (10) tandis qu'il se resserre empêchant le dévissage du bouchon lorsque l'autre des faces (P2) de l'encoche (10) vient en appui sur l'ergot (9).

3. Dispositif selon la revendication 2, caratérisé en ce que deux encoches (10) diamétralement opposées sont prévues.

4. Dispositif selon les revendications 2 ou 3, caractérisé en ce qu'au moins un dégagement (11) débouchant dans l'encoche (10), est prévu sur la face extérieure (12) du boîtier de crémaillère (1).

5. Dispositif selon les revendications 3 ou 4, caractérisé en ce qu'une déformation (13) destinée à coopérer avec l'encoche (10) opposée à celle recevant l'ergot (9), est réalisée sur la spire extérieure du ressort autobloquant (8).

6. Dispositif selon la revendication 1, caractérisé en ce que le ressort autobloquant (15) forme un filet rapporté disposé autour du bouchon (6) dans son filetage (14) et comporte à une de ses extrémités un ergot (16) tourné vers l'intérieur du ressort (15) en forme de filet, destiné à coopérer avec une encoche (17) formée dans le bouchon (6) sur sa face tournée vers l'intérieur du boîtier (1), le ressort (15) étant entraîné, lors du vissage du bouchon (6), par l'ergot (16) en appui sur l'une des faces (P1) de l'encoche (17), tandis qu'il se ressere empêchant le dévissage du bouchon (6) lorsque l'autre des faces (P2) de l'encoche (17) vient en appui sur l'ergot (16).

7. Dispositif selon la revendication 6, caractérisé en ce que le ressort autobloquant (15) comporte à son autre extrémité un crochet (18) retourné vers l'intérieur du ressort et en appui sur la face extérieure (12) du bouchon (6) de manière à permettre son entraînement par un outil lors du démontage du bouchon.

**Patentansprüche**

1. Vorrichtung zum Einstellen des Spiels zwischen der Zahnstange (2) und dem Ritzel (3) eines Zahnstangenlenkmechanismus für Kraftfahrzeuge, mit einem Drücker (4), dessen Boden gegen die Zahnstange (2) durch ein elastisches Element, beispielsweise eine Schraubenfeder (5) drückt, die sich auf einem Deckel (6) abstützt, der in das Zahnstangengehäuse (1) eingeschraubt ist, wobei ein minimales Spiel (J) zwischen dem Deckel (6) und dem Drücker (4) vorgesehen ist, **dadurch gekennzeichnet,** daß sie eine selbstblockierende Feder (8,15) aufweist, die um den Deckel (6) angeordnet ist und einen Vorsprung (9,16) aufweist, der mit einer Kerbe (10,17) von einer vorbestimmten Breite (L) zusammenwirkt, die auf dem Zahnstangengehäuse (1) oder in dem Deckel (6) erzeugt ist, wobei der Vorsprung mit einer der Seiten (P1) der Kerbe (10,17) zusammenwirkt bei dem Einschrauben des Deckels (6), während er mit der anderen Seite (P2) der Kerbe zusammenwirkt, um das Herausschrauben des Deckels auf den Wert (L) der Kerbe zu begrenzen, der dem Wert (J) des gewünschten minimalen Spiels entpricht.

2. Vorrichtung nach Anspruch 1, **dadurch gekennzeichnet,** daß die selbstblockierende Feder (8) in einer Auskehlung (7) angeordnet ist, die am Ende des Deckels (6), das nach dem Äußeren des Gehäuses (1) gedreht ist, angeordnet ist, und einen Vorsprung (9) aufweist, der in einer Kerbe (10) angeordnet ist, die auf der Außenseite (12) des Zahnstangengehäuses (1) ausgebildet ist, wobei die Wickelrichtung der selbstblockierenden Feder (8) so ist, daß sie sich löst unter Ermöglichen des Schraubens des Deckels (6), wenn der Vorsprung (9) gegen eine der Seiten (P1) der Kerbe (10) drückt, während sie sich unter Verhindern des Lösens des Deckels zuzieht, wenn die andere Seite (P2) der Kerbe (10) in Anlage an den Vorsprung (9) kommt.

3. Vorrichtung nach Anspruch 2, **dadurch gekennzeichnet,** daß zwei diametral gegenüberliegende Kerben (10) vorgesehen sind.

4. Vorrichtung nach Anspruch 2 oder 3, **dadurch gekennzeichnet,** daß wenigstens eine Ausnehmung (11), die in die Kerbe (10) mündet, an der Außenseite (12) des Zahnstangengehäuses (1) vorgesehen ist.

5. Vorrichtung nach Anspruch 3 oder 4, **dadurch gekennzeichnet,** daß eine Ausbuchtung (3), die dazu dient, mit der Kerbe (10) zusammenzuwirken, die jener gegenüberliegt, die den Vorsprung (9) aufnimmt, auf der Außenwindung der selbstblockierenden Feder (8) erzeugt ist.

6. Vorrichtung nach Anspruch 1, **dadurch gekennzeichnet,** daß die selbstblockierende Feder (15) einen umgeschlagenen Gewindegang bildet, der um den Deckel (6) in dessen Gewinde (14) angeordnet ist und an einem seiner Enden einen Vorsprung (16) aufweist, der zu dem Inneren der Feder (15) in Form eines Gewindeganges gedreht ist, dazu bestimmt, mit einer Kerbe (17) zusammenzuwirken, die in dem Deckel (6) auf seiner nach dem Inneren des Gehäuses (1) gedrehten Seite ausgebildet ist, wobei die Feder (15) beim Einschrauben des Deckels (6) durch den Vorsprung (16) in Anlage auf eine der Seiten (P1) der Kerbe (17) mitgenommen wird, während sie sich zuzieht, wodurch das Lösen des Deckels (6) verhindert wird, wenn die andere Seite (P2) der Kerbe (17) in Anlage an den Vorsprung (16) kommt.

7. Vorrichtung nach Anspruch 6, **dadurch gekennzeichnet,** daß die selbstblockierende Feder (15) an ihrem anderen Ende einen Haken (18) aufweist, der zu dem Inneren der Feder gedreht ist, und in Anlage ist auf die Außenseite (12) des Deckels (6) derart, daß seine Mitnahme durch ein Werkzeug bei der Demontage des Deckels ermöglicht wird.

## Claims

1. A device for regulating the play between the rack (2) and the driving pinion (3) of a rack-type steering mechanism for a motor vehicle, comprising a thruster (4), the base of which is applied against the rack (2) by a resilient element, for example a helical spring (5), being supported by a plug (6) screwed into the rack housing (1), minimal play (J) being provided between the plug (6) and the thruster (4), characterised in that it comprises a self-locking spring (8, 15) disposed around the plug (6) and comprising a lug (9, 16) cooperating with a notch (10, 17) of a predetermined width (L) made in the rack housing (1) or in the plug (6), the lug cooperating with one of the faces (P1) of the notch (10, 17) when the plug (6) is screwed in, while it cooperates with the other face (P2) of the notch to limit the amount by which the plug unscrews to the value (L) of the notch corresponding to the value (J) of minimum play desired.

2. A device according to Claim 1, characterised in that the self-locking spring (8) is disposed in a groove (7) made at the end of the plug (6), pointing towards the outside of the housing (1) and comprising a lug (9) disposed in a notch (10) made in the outer face (12) of the rack housing (1), the direction in which the self-locking spring (8) is wound being such that it slackens to allow the plug (6) to be screwed in when the lug (9) is resting against one of the faces (P1) of the notch (10) while it tightens to prevent the plug from being unscrewed when the other face (P2) of the notch (10) comes to rest against the lug (9).

3. A device according to Claim 2, characterised in that two diametrically opposite notches (10) are provided.

4. A device according to Claims 2 or 3, characterised in that at least one relief (11), opening into the notch (10), is provided in the outer face (12) of the rack housing (1).

5. A device according to Claims 3 or 4, characterised in that a deformation (13) intended to cooperate with the the notch (10) opposite that receiving the lug (9), is made on the outer turn of the self-locking spring (8).

6. A device according to Claim 1, characterised in that the self-locking spring (15) forms an added thread disposed around the plug (6) in its threading (14) and comprises at one of its ends a lug (16) pointing towards the inside of the spring, (15) in the form of a thread, intended to cooperate with a notch (17). formed in the plug (6), on its face pointing towards the inside of the housing (1), the spring (15) being pulled around, when the plug (6) is screwed in, by the lug (16) resting against one of the faces (P1) of the notch (17), while it tightens preventing the plug (6) from being unscrewed when the other face (P2) of the notch (17) comes to rest against the lug (16).

7. A device according to Claim 6, characterised in that the self-locking spring (15) comprises at its other end a hook (18) pointing towards the inside of the spring and resting against the outer face (12) of the plug (6) so as to allow it to be pulled around by a tool when the plug is removed.

5

FIG.1

FIG. 2

FIG. 3

FIG. 5

FIG. 4